Europäisches Patentamt

European Patent Office

Office européen des brevets

(11) Veröffentlichungsnummer: **0 287 050 B1**

(12) **EUROPÄISCHE PATENTSCHRIFT**

(45) Veröffentlichungstag der Patentschrift: **18.03.92**

(21) Anmeldenummer: **88105855.6**

(22) Anmeldetag: **13.04.88**

(51) Int. Cl.⁵: **C04B 18/06**

(54) Verfahren zur Verarbeitung der mit den Rauchgasen ausgetragenen oder in den Filtern anfallenden Wirbelschichtasche.

(30) Priorität: **13.04.87 DE 3712545**
**01.06.87 DE 3718336**
**23.11.87 DE 3739604**
**15.03.88 DE 3808519**

(43) Veröffentlichungstag der Anmeldung:
**19.10.88 Patentblatt 88/42**

(45) Bekanntmachung des Hinweises auf die Patenterteilung:
**18.03.92 Patentblatt 92/12**

(84) Benannte Vertragsstaaten:
**BE DE FR GB**

(56) Entgegenhaltungen:
**EP-A- 0 022 318** **EP-A- 0 109 506**
**EP-A- 0 152 637** **DD-A- 35 222**
**DE-A- 2 714 536** **DE-A- 3 539 264**
**DE-B- 1 228 984**

(73) Patentinhaber: **Ackermann, Manfred F.,
Dipl.-Ing.
Heidestrasse 49
W-4630 Bochum 6(DE)**

(72) Erfinder: **Ackermann, Manfred F., Dipl.-Ing.
Heidestrasse 49
W-4630 Bochum 6(DE)**

(74) Vertreter: **Schulte, Jörg, Dipl.-Ing.
Hauptstrasse 2
W-4300 Essen-Kettwig(DE)**

EP 0 287 050 B1

# Beschreibung

Die Erfindung betrifft ein Verfahren zur Nutzung von fein- und feinstkörniger Wirbelschichtasche, die besonders bei der Verbrennung von ballasthaltigen Steinkohlen unter Kalkzugabe mit den Verbrennungsgasen aus dem Fluidbett abgeführt und an den Wärmetauschern bzw. Filtern anfällt.#

Durch die spezielle Art der Schwefeleinbindung in Wirbelschichtfeuerungsanlagen, d.h. durch die Zugabe von Kalk, vorzugsweise in Form von gemahlenem Kalzium-Karbonat, in den Feuerungsraum ist die Flugasche, besonders die an den Staubfiltern anfallende Asche, mit den Reaktionsprodukten vorwiegend CaSO$_4$ und entsäuertem Kalk belastet. Bei Wasserzutritt aktiviert der ablöschende Branntkalk die stark entwässerten Anhydritanteile, so daß die Verarbeitung derartiger Aschen in Zementbindung, sofern ein dichtes Mörtel- oder Betongefüge angestrebt ist, Probleme aufwirft. Schwierigkeiten entstehen besonders durch die verzögerte Abbindereaktion des Zementes und durch Quellvorgänge, die ggfs. die Zementsteinstruktur beeinträchtigen. Die damit gegebene Verwendungsbeeinträchtigung der Wirbelschichtasche zwang bisher dazu, die anfallende Asche auf besonderen Deponien einzulagern. Probleme entstehen insbesondere dadurch, daß der Anteil der Körnung < 63 $\mu$m 70 Gew.-% beträgt und die Wirbelschichtasche daher zum "Fließen" neigt und nur mit hohem Aufwand zu transportieren und zu lagern ist. Die rauhe Kornoberfläche und die geringe Dichte des Abbrandes bieten jedoch die Voraussetzung dafür, daß die Achse zu einem Beton- oder Mörtelzuschlag mit Tendenz zu geringer Dichte verarbeitet werden kann, der im Bereich der Leichtbetontechnik sowohl in Ortbeton sowie auch im Bereich präfabrizierter Bauteile und Steine einsetzbar ist. In dieser Industrie wird für den Zuschlag ein Schüttgewicht im Bereich einer Dichte zwischen 0,5 und 1,4 kg/dm$^3$ gewünscht. Dafür eingesetzt wird bisher in der Regel Naturbims, weil dieser ein hohes Porenvolumen und eine niedrige Rohdichte aufweist. Er zeichnet sich außerdem durch eine hohe Kornstabilität aus und ist daher für die Herstellung großformatiger, aber leichter Steine besonders gut geeignet.

Naturbims ist vulkanischen Ursprungs und wird im Tagebau gewonnen. In der Bundesrepublik Deutschland liegen die umfassendsten Bimsvorkommen in der Eifel, jedoch geben die Belastung der Landschaft und Umwelt durch die Tagebaugewinnung, die Erschöpfung guter Lagerstätten, der zunehmende Aufbereitungsaufwand wegen der Verunreinigung der noch vorhandenen Lagerstätten, sowie die hohen Vorkostenbelastungen aufgrund langer Transportwege Veranlassung, für derartige Zuschlagstoffe ein Substitut zu suchen. Bisher eingesetzte Substitute wie Schlacken, Schlakkengranulate oder ähnlichen Materialien, haben eine relativ hohe Rohdichte oder eignen sich aus anderen Gründen, beispielsweise aufgrund ihrer Zusammensetzungen, nicht besonders als Zuschlagsstoff für die Herstellung von Mörteln oder Betonen. Aus der DE-OS 22 04 175, der DE-AS 12 28 984 und der US-PS 4 344 796 sind Verfahren zur Verwendung der feinstkörnigen Wirbelschichtasche bekannt. Bei allen bekannten Verfahren bleibt der Anhydritanteil in der Asche ohne Berücksichtigung. Die Festigkeit der nach diesen Verfahren hergestellten Pellets hat sich daher als nicht befriedigend erwiesen.

Der Erfindung liegt die Aufgabe zugrunde, für mehrere Anwendungszwecke ein geeignetes, variables und anpassungsfähiges Verarbeitungsverfahren für die in Wirbelschichtanlagen anfallende feinstkörnige Wirbelschichtasche nachzuweisen und dabei gleichzeitig ein Substitut für herkömmliche Leichtzuschläge zu schaffen.

Die Aufgabe wird erfindungsgemäß dadurch gelöst, daß die Wirbelschichtasche mit bis zu 25 Gew.-% eines Bindemittels, wie z.B. Zement, Kalk oder Gips intensiv gemischt und einem durchfeuchteten kernebildenden Material in der Körnung 1 - 10 mm zugegeben und so lange durchmengt wird, bis die gewünschte Volumenvergrößerung durch Anlagerung des Feinmaterials an die Kernbilder eingetreten ist und das so erhaltene Produkt zum Abbinden und Aushärten aus dem Mischer ausgetragen, ggfs. zusätzlich hydrothermal gehärtet und gelagert wird. Das Mengenverhältnis der kernbildenden Anteile zu dem feinkörnigen Materialanteil beträgt in Abhängigkeit von der Dichte der Stoffe 1 : 5 bis 1 : 3.

Die während des Aushärtungsprozesses auftretenden Reaktionen beeinträchtigen das Produkt überraschenderweise nicht. Eventuelle Quellvorgänge des Anhydrits lockern die Materialkörner auf, ohne daß die äußere Hülle zerstört wird oder die Festigkeit der Körner, noch die aus diesem Material hergestellten Betonformkörper beeinträchtigt werden. Ein derartiges Verfahren ermöglicht es, die bisher abzulagernden Wirbelschichtaschen so zu verarbeiten, daß sie überraschenderweise als Leichtzuschlag, beispielsweise bei der Hohlblocksteinherstellung, zum Einsatz kommen können. Die feinstkörnige Wirbelschichtasche, die aufgrund der Zusammensetzung ihrer Inhaltsstoffe und der thermischen Behandlung latenthydraulische Eigenschaften aufweist, wird nach der Zumischung von Zement in die Lage gebracht, sich an das grobstückigere Kernmaterial anzulagern, dieses mantelförmig zu umgeben, wobei durch die Rotation des Durchmengens eine ausreichend stabile Hülle entsteht, der das Mischprodukt nach dem Aushärtevorgang die Qualität eines optimalen Zuschlagproduktes verdankt. Aufgrund des beeinflußbaren Kernkornbandes entsteht ein auf den Verwendungszweck einstellbares Produkt, das die anschließende Weiterverarbeitung begünstigt, also eine weitere Vorbereitung nicht notwendig werden läßt. Überraschend ist weiter, daß während des Abbindeprozesses keine Ettringit-Schäden auftreten. Die einmal gebildeten Kornkörper bleiben raumstabil und bilden den vorteilhaften Leichtzuschlag, dessen Festigkeit bei der Verarbeitung zu Leichtmörtel oder zu Leichtbeton erhalten bleibt.

Nach einer zweckmäßigen Weiterbildung der Erfindung ist es vorgesehen, daß die noch ofenwarme Wirbelschichtasche mit Zement durch Verwirbelung gemischt und die Wärme beim anschließenden Abbindeprozess als Beschleuniger ausgenutzt wird. Aufgrund der Aschentemperatur wird beim Abbindevorgang Zement eingespart. Vorteilhaft ist weiter, die Ausnutzung der Oberflächenrauhigkeit der Asche, die hauptsächlich den inneren Porenraum der Agglomerate bewirkt, wenn sie die kernbildenden groberen Materialien umhüllt. Dieser Effekt ist von besonderer Wichtigkeit bei der Aussteuerung der Kornrohdichte.

Entsprechend der gewünschten Festigkeit des Produktes bzw. des Leichtzuschlagsstoffes wird erfindungsgemäß der Wirbelschichtasche, je nach späterem Einsatzbereich, 3 bis 15 Gew.-% vorzugsweise 10 Gew.-% Zement als Portland-, Hochofen oder Eisenportlandzement zugemischt. Wird eine hohe Endfestigkeit des Produktes verlangt, kann durch regelmäßige Befeuchtung der fertigen Agglomerate die latenthydraulische Eigenschaft der Asche zusätzlich ausgenutzt werden. Der bei der Zementreaktion frei werdende Kalkanteil verbindet sich mit gelösten $SiO_2$-anteilen und bewirkt so eine deutlich über den 28 Tage-Wert hinausgehende Festigkeitssteigerung. Auch dies zeigt die Vielseitigkeit des erfindungsgemäßen Verfahrens.

Eine vorteilhaft gleichmäßige und gerichtete Durchmengung begünstigt die Gleichmäßigkeit der Körper bzw. Körner besonders, wenn trockene Wirbelschichtasche dem feuchtekonditionierten Material kontinuierlich während des Durchmengens und Formens zugeführt wird. Dabei kann durch eine geregelte Zugabe trockener Wirbelschichtasche nicht nur die Hüllenstärke, sondern gleichzeitig auch die Festigkeit der das Kernmaterialumgebenden Mantelhüllen beeinflußt werden. Als befeuchtetes Kernmaterial wird vorzugsweise eine Kombination von Kesselasche und Bettasche aus der Wirbelschichtanlage in der bereits beschriebenen Körnung eingesetzt. Aber auch Hüttensand, Schlakkensand oder geschäumtes bzw. gefasertes Material kann Verwendung finden. Durch die Rohdichte des Kernmaterials, seine Wasseraufnahmefähigkeit und seine Kornform wird die Festigkeit und Schüttdichte eines sich nach dem Verfahren bildenden Leichtkorns beeinflußt, wobei der Herstellungsprozess nach dem Schneeballsystem abläuft.

Insbesondere dann, wenn größere Mengen Wirbelschichtasche zur Erzeugung von entsprechend großen Körnern zugegeben werden, ist es von Vorteil, wenn das Mischprodukt während des Durchmengens mit Wasser bedüst wird. Dadurch erhält das Material die Möglichkeit, eine entsprechend dicke kernumhüllende Schicht aufzubauen, die nicht nur von der vorher aufgenommen Kern- und Oberflächenfeuchte des Kernmaterials abhängig ist.

Um ein gleichmäßiges Kornband zu erreichen ist es erfindungsgemäß vorgesehen, daß das Durchmengen und Formen überwacht und bei Erreichen der gewünschten oberen Korngröße das Mischprodukt ausgetragen und gelagert wird.

Entsprechend der Größe der Kerne, der Materialaufgabe, der Befeuchtung und der Ausbildung des Mischers kann die Bildung des Kornbandes beeinflußt und vorgegeben werden, so daß das Produkt einen Leichtzuschlag ergibt, der den jeweiligen Einsatzbedingungen entspricht.

Das Produkt wird nach dem Austrag aus dem Mischer über eine Rollbahn abgeleitet und dabei mit trockener Wirbelschichtasche bestäubt. Ein Zusammenbacken der einzelnen Körner ist so vorteilhaft verhindert. Anschließend wird das Produkt - je nach dem Verwendungszweck - über ein einfaches oder mehrstufiges Sieb klassiert, dessen feinste Siebstufe durch die untere Korngröße des Verwendungszwecks bestimmt wird. Der Siebdurchgang wird wieder zurückgeführt und der Materialaufgabe entweder als Kernmaterial oder als Streugut zugeführt. Bei diesem Klassiervorgang wird das lose an den Agglomeraten anhaftende Streugut von der benannten Rollbahn entfernt, um den Anteil der abschlämmbaren Bestandteile unter den zugelassenen Werten der DIN 4226 zu halten.

Bei hoher Sulfatbelastung des Einsatzstoffes, d.h. auch bei hohem Anhydritanteil der Flugaschen ist es zweckmäßig, das Produkt mit langsam abbindenden Zementen, z.B. HOZ 35 L, abzubinden. Die verzögerte Abbindung verhindert, daß durch eine eventuelle Etringitbildung oder durch sonstige Quellvorgänge hervorgerufene Volumenvergrößerung nach dem Erstarrungsvorgang des Zementes abläuft und damit die Bildung einer stabilen Zementsteinstruktur beeinträchtigt.

Wie bereits ausgeführt, gehört es zum entsorgungsbewußten Verfahren, daß nicht nur die in den Filtern anfallenden Wirbelschichtaschen benutzt werden, sondern auch die an den Wärmetauschern anfallende Kesselasche und die verwendbaren Teile der Bettasche. Die letztgenannten Aschen werden erfindungsgemäß als Kernmaterial eingesetzt. Hierbei wirkt die Bett- und Kesselasche als Kern für die Herstellung der "Schneebälle", so daß auch diese Sekundärstoffe vorteilhaft mitverarbeitet werden können. Die Zweckmäßigkeit des Einsatzes dieser Kerne wird aber bestimmt durch die angestrebte Schüttdichte des Produktes bzw. dessen Verwendungszweck.

Eine Weiterbildung des Verfahrens erlaubt es, lediglich durch Veränderung der Stoffart der Kerne (Mineralfaser, Kunststoff, Textilfaserstoff) oder der Körnung der Kernbildner und/oder des Anteils des Kernbildner das Endprodukt so zu gestalten, wie es für den jeweiligen Verwendungszweck erforderlich ist. Hierzu werden größere Körnungen im Kornbereich zwischen 1,0 - 10,0 mm als Kernbildner eingesetzt, wobei die Kornbandspreizung und der Körnungsanteil über die Zugabe der jeweiligen Kerne auf den Verwendungszwecke des herzustellenden Zuschlags abgestellt wird. Sofern ein breites Produktkornband gewünscht wird, muß eine entsprechende Kornbandspreizung des kernbildenden Einsatzkornbandes eingestellt werden, während bei einem gewünschten schmalen Produktkornband auch die Spreizung des Einsatzkornbandes bis zur sog. Monokörnung eng gewählt wird. Ist ein gleichkörniges Zielband erwünscht so werden gleichkörnige Kerne eingesetzt. Damit ist dem Fachmann eine Lehre an die hand gegeben die es ihm ermöglicht, genau auf das Endprodukt eingestellte Körnungen zu produzieren, wozu er lediglich das Einsatzkornband der Kernbildner entsprechend vorbehandeln, d.h. ggfs. zerkleinern, im Normalfall nur absieben muß. Die Vielseitigkeit des erfindungsgemäßen Verfahrens bringt erhebliche praktische Vorteile für die Verwendung mit sich, die wegen der negativen Eigenschaften der Asche nicht zu erwarten waren. Neben der Kornbandspreizung sind weitere Einflußgrößen durch die Mischungsfeuchte, Bindemittelart und -menge, Agglomerationsart, Wasserbedüsung und Puderung des konditionierten Mischgutes während der Formung, sowie die Kerndichte gegeben.

Nach einer zweckmäßigen Weiterbildung der Erfindung wird als hydraulisch abbindendes Bindemittel der Agglomerate Kalk eingesetzt, der mit der Wirbelschichtasche und den Kernbildnern gemischt und zur Verminderung der Abbindezeit, aber auch zur zeitlichen Begrenzung etwa störender Reaktionen, nach der Formung unter Sattdampfbedingungen gehärtet wird. Da beim Verbrennungsprozeß in der Wirbelschicht - wie bereits eingangs berichtet - Kalk eingesetzt wird, kann mit dieser Verfahrensvariante vorteilhaft auf den überschüssigen Kalkanteil zurückgegriffen werden, der in der Asche als Kalzium-Oxyd (Branntkalk), Kalziumkarbonat (Kalkstein) oder als Kalziumsulfat (Anhydrit) vorliegt. In vielen Fällen erübrigt sich sogar die Kalkzugabe, weil aus verfahrenstechnischen Gründen die Kalkzugaben in überstöchiometrischem Verhältnis zugegeben werden und deswegen die Filteraschen Kalkanteile um 6 - 7 Gew.-% aufweisen.

Das erfindungsgemäße Verfahren sieht dementsprechend eine Bindemittelzugabe in Form von Kalk als CaO oder Ca(OH)$_2$ jeweils unter Berücksichtigung der in der Wirbelschichtasche enthaltenen Kalkmenge auf 6 - 7 Gew.-% ergänzend vor, sofern der Kalkanteil in der Wirbelschichtfilterasche aus systembedingten oder verfahrenstechnischen Gründen unter diesen Gewichtsanteilen liegt. Es hat sich überraschend und vorteilhaft herausgestellt, daß sich eine ergänzende Kalkzugabe in Form von Branntkalk oder Kalkhydrat ab einem Anteil von 2 Gew.-% CaO in der Filterasche erübrigt. Daher ist in vielen Fällen der Leichtzuschlagherstellung auf Bindemittelzugaben und auf die Verfahrensschritte, die mit ihrer Bevorratung und der Vergleichmäßigung mit der Wirbelschichtasche verbunden sind, zu verzichten. In diesen Fällen kann die Einmischung der Kernbildner in die Wirbelschichtasche und der Vorgang der Agglomeration mit geringem stofflichen und apperativem Aufwand durchgeführt werden.

Das Verfahren wird in diesen Fällen vorteilhaft verkürzt bzw. kurz gehalten und damit die Wirtschaftlichkeit der Produktherstellung erheblich erhöht. Die anschließende Aushärtung unter Sattdampfbedingungen erfolgt bei ca. 180° C. über eine Dauer von 4 - 6 Stunden.

Nach einer weiteren Ausbildung der Erfindung ist es vorgesehen, als Bindemittel Gips einzusetzen. In zunehmendem Maße wird durch die Rauchgasentschwefelung der Kraftwerke Industriegips anfallen, der nach der Oxydation als α-Halbhydrat zur Verfügung steht. Der hohe Anfall an Rauchgasgips, dessen Entsorgung bzw. Nutzung ebenfalls bedacht werden muß, kann im Zuge des hier beschriebenen Verfahrens vorteilhaft eingesetzt werden. Bei diesem Einsatz wird auf eine begünstigende Weise auch der Anhydritanteil in der Wirbelschichtfilterasche in das erfindungsgemäße Verfahren einbezogen. Besonders vorteilhaft ist es, wenn bei der Zugabe von Gips zur Wirbelschichtasche in Abhängigkeit von dem in der Asche enthaltenen hochentwässerten Anhydritanteil langsam abbindender Gips in der Form A II U-Mittelbrand bis zu ca. 25 Gew.-% Gesamtanteil, bezogen auf die Trockenmasse, zugeführt wird. Es hat sich gezeigt, daß auf diese Art und Weise ein Zuschlag hergestellt werden kann, der nach der Aushärtung alle Voraussetzungen aufweist, die an Leichtzuschlagstoffe für Trockenbauplatten aus gipsgebundenem Mineralstoff Konstruktionen des Innenausbaus sowie für Dämmschüttungen und Dämm-Mörtel im Bereich des Trockenausbaus gestellt werden.

Um die Kornbildung beim Herstellungsprozeß besonders genau beeinflussen zu können, ist es von Vorteil, wenn die Wirbelschichtfilteraschen und ggfs. das Bindemittel sowie die Kernbildner trocken vergleichmäßigt werden und, in Abhängigkeit von der Kornfeinheit der Trockenmischung auf ca. 20 - 24 % teilbefeuchtet werden. Die Teilbefeuchtung hat den Vorteil, daß durch gezielte weitere Maßnahmen, z.B. die intermittierende Bedüsung und/oder Puderung der Anlagerungsprozeß zu kürzen oder evtl.zu verlängern ist.

Eine weitere Beeinflussung der Produktqualität ist dadurch gegeben, daß befeuchteten Kernbildnern in einer waagerecht oder schwach geneigt laufenden Trommel trockene Wirbelschichtfilterasche oder, wo notwendig, mit Bindemittel vergleichmäßigte Wirbelschichtfilterasche zugegeben und mit Hilfe eines Krähl- oder Mischwerks vermengt wird. Der Mischvorgang in Verbindung mit der Rotationsbewegung der Trommel begünstigt eine gleichmäßige Agglomeration. Bei diesem Verfahren ist es als besonders vorteilhaft anzusehen, daß Teilkörnungen nicht vorzeitig ausgetragen werden, sondern erst dann ein Austrag willkürlich bewirkt werden kann, wenn die gewünschte Volumengröße der Agglomerate erreicht ist. Durch zusätzliches Besprühen bzw. Bedüsen der sich bildenden Kerne mit Wasser und durch Bepudern der so angefeuchteten Agglomerate mit bindemittelhaltiger Wirbelschichtfilterasche kann diese Verfahrensvariante unterstützt werden.

Bei gewünschter höherer Schüttdichte des Produktes kann als grobkörniger Kernbildner auch granulierte Bettasche sowie Grobsand und Feinsplitt aus grünem Bergematerial oder anderem Gestein eingesetzt werden. Die für die Kernbildung vorgesehenen Komponenten werden bei ca. 5 mm Maschenweite klassiert und der Siebdurchlauf ggfs. unter Einbeziehung des Bindemittels mit der Wirbelschichtasche vergleichmäßigt. Durch die höhere Dichte der Kerne und deren Größenabstufung bzw. Anordnung in der Sieblinie entsteht ein kornabgestuftes oder breites und stetiges Kornband höherer Dichte.

Die Erfindung zeichnet sich insbesondere dadurch aus, daß ein die Verwertung von Wirbelschichtfilteraschen ermöglichendes Verfahren geschaffen worden ist, das eine weitgehende Anpassung an den jeweiligen Verwendungsweck ohne allzu großen Aufwand erlaubt. Das entsprechend hergestellte Material kann vorteilhaft als Leichtzuschlagstoff zu Leichtbeton örtlicher oder präfabrikatorischer Art verarbeitet werden, wenn es kalk- oder zementgebunden ist. In Trockenbauplatten, Dämmschüttungen und beispielsweise als Gipsformteil des Innenausbaues kann es eingesetzt werden, wenn es sich um gipsgebundenen Zuschlagstoff handelt. Die Variationen der Dichte ermöglicht den Einsatz in Konstruktionen, die einerseits hohe Tragfestigkeit (ca. 20 - 25 N/mm$^2$), andererseits höhere Dämmqualität aufweisen. Die Zuschläge höherer Dichte können als Betonzuschlag oder Tragschichtkomponenten Einsatz finden, wogegen die Zuschläge mit niedriger Dichte in Block- und Hohlblocksteinen beispielsweise ihre Anwendung finden.

Ein weiterer Vorteil des Verfahrens mit seinen Varianten besteht in der Möglichkeit auf vorhandene Aggregate zurückgreifen zu können, die bei entsprechender Anpassung kostengünstig einzusetzen sind. Das Verfahren ermöglicht darüber hinaus, vorteilhaft den Rückgriff auf das Bindemittel Kalk über die in der Wirbelschichtasche enthaltene aktive Kalkmenge. Dabei hat sich gezeigt, daß in Folge der überstöchiometrischen Kalkzugabe beim Verbrennungsprozeß so hohe aktivierbare Kalkbestandteile in den Filteraschen vorliegen, daß eine ergänzende Zugabe nur in Sonderfällen erforderlich wird. In Ballungsgebieten wird die Kalkzugabe aus Rücksicht auf die Umweltbelastung oder in Absprache mit den Genehmigungsbehörden in so hoher Dosierung zugegeben, daß die Emmissionswerte deutlich unter den zugelassenen Werten gehalten werden können. Dieser umweltfreundliche Aspekt der Wirbelschichtfeuerungsanlagen hinsichtlich der Schwefeleinbindung verbessert die Wirtschaftlichkeit des mit dieser Beschreibung vorgestellten Entsorgungs- und Nutzungsverfahrens.

Um den kontinuierlichen Produktionsprozess bei der Herstellung des Leichtzuschlages auch in den Fällen längerer Betriebsstörungen aufrecht halten und Lieferverpflichtungen erfüllen zu können, ist daran gedacht, den Filteraschen aus feststoffbeheizten Kraftwerken glühverlustarme Filteraschen zuzugeben.

Diese latent hydraulischen Flugaschen eignen sich besonders bei Zuschlägen mit gewünschter Schüttdichte => 1 kg/dm$^3$. Da Kraftwerksaschen im allgemeinen keine Bindemittelanteile enthalten, muß in den Fällen der Kombination das jeweils eingesetzte Bindemittel bis zu den erforderlichen Mengen durch Zugabe angepasst werden. Das sind

bei Zementbindung ca. 15 Gew.-%

bei Kalkbindung ca.6,5 Gew.-%

bei Gipsbindung ca. 25 Gew.-%.

Lösungen dieser Art bieten sich besonders dort an, wo Wirbelschicht-Anlagen benachbart oder in Kombination mit Kohle-Kraftwerken betrieben werden.

Anhand der nachfolgenden Figuren wird das Verfahren, bzw. werden die verschiedenen Varianten zusätzlich erläutert.

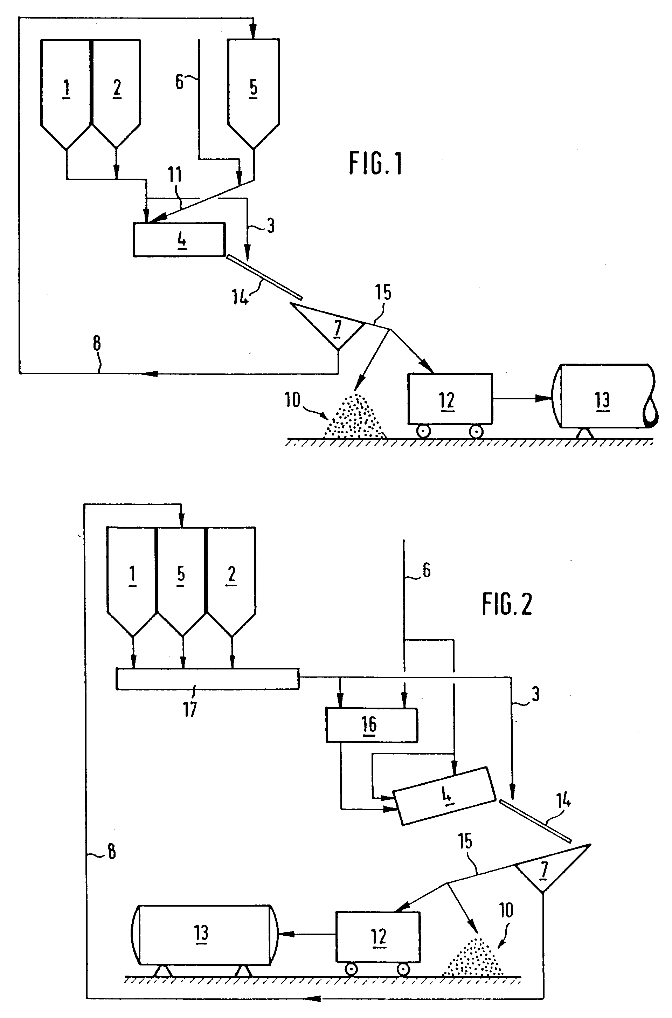

Nach Figur 1 wird die feinkörnige Filterasche im Filteraschebunker (1) vorgehalten, während das benötigte Bindemittel aus dem Bindemittelbunker (2) zugeführt und vorzugsweise auf dem Weg zum Zwangsmischer (4) bereits intensiv vermengt wird. In den Zwangsmischer (4) hinein gelangt auch mit entsprechender Dosierung am Ende der Benetzungsstrecke (11) Kernmaterial aus dem Kernmaterialbunker (5). Durch entsprechende Dosierung im Verhältnis zur Filterasche aus dem Filteraschebunker (1) ist eine Einstellung der jeweils gewünschten Korngröße bzw. des Kornmantels möglich. Die Kerne werden intensiv befeuchtet, wobei Wasser über die Wasserzugabe (6) eingedüst und in die Benetzungsstrecke (11) eingespritzt wird. Die Mischungsfeuchte ist für die Einstellung der Korngröße der Agglomerate bedeutsam. Das Material wird dann im Zwangsmischer (4) intensiv miteinander gemischt und zwar so, daß sich das gewünschte Kornband einstellt. Dieses Material wird dann über eine bepuderte Rollbahn (14) ausgetragen und über das Sieb (7) geführt, wobei der Siebdurchgang (8) beispielsweise in der Körnung unter 2 mm zurückgeführt und über den Kernebunker (5) erneut in den Prozeß eingegeben wird. Der Siebüberlauf (15) dagegen wird je nach Bindemittelart entweder in einen Härtewagen (12) gefüllt und dann in dem Druckkessel (13) einem Härteprozeß unterzogen oder auf einem Lagerplatz (10) zum Aushärten gelagert.

Figur 2 zeigt eine Verfahrensvariante, wobei Filteraschebunker (1), Bindemittelbunker (2) und Kernmaterialbunker (5) auf einer Gesamtmischstrecke (17) dosiert wird, die ihrerseits an den Vormischer (16) austrägt, dem über die Wasserzugabe (6) Wasser zugeführt wird. Hier erfolgt im Vormischer (16) eine Vorbefeuchtung, während in der Trommel, bzw. im Zwangsmischer (4) die endgültige Formung des Zielkorns erfolgt. Aus dem Zwangsmischer wird das Material über ein bepudertes Rollband (14) auf das Sieb (7) ausgetragen und klassiert. Auch hier kann der Siebüberlauf (15) entweder zur Härtung oder zur Lufttrocknung weitergegeben werden, während der Siebdurchgang (8) dem Kernmaterialbunker (5) wieder zugeführt wird.

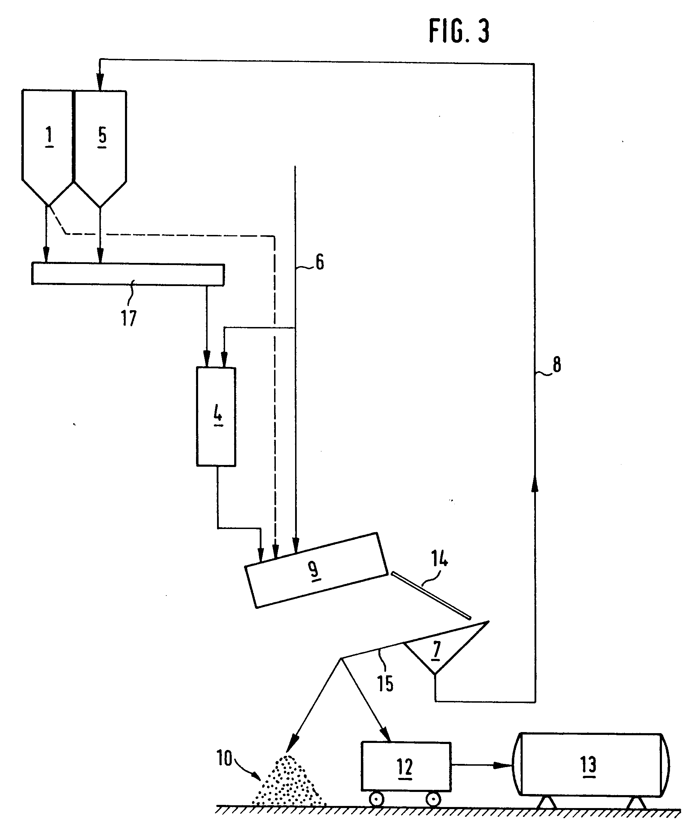

Die Figur 3 zeigt eine Verfahrensvariante bei der unterstellt wird, daß der Filteraschenanteil einen für den Prozeß ausreichend hohen aktiven Kalkanteil enthält, so daß ein Bindemittelbunker entfallen kann. Aus dem Filteraschenbunker (1) wird das kalkhaltige Filteraschenmaterial abgezogen und auf der Mischstrecke (17) mit kernbildendem Material aus dem Kernmaterialbunker (5) im vorgesehenen Verhältnis dosiert und gemischt. Das vorgemischte Material wird in den Zwangsmischer (4) gegeben und mittels der Wasserzuführung (6) auf die gewünschte Feuchte eingestellt. Das Material wird kontinuierlich aus dem Unterlauf des Mischers abgezogen (8) und einer Trommel (9) zugeführt, wo im Bedarfsfall durch Bedüsung aus der Wasserzuleitung (6) und der Puderung mit trockener Filterasche aus dem Bunker (1) über die gestrichelte Zuleitung das Finish der Kornformung erfolgt.

Ein Kochversuch mit Agglomeration in den Körnungen 4 - 2 mm, 8 - 4 mm und 10 - 8 mm mit einer mittleren Dichte von 0,94 kg/dm$^3$ ergab nach der Absiebung nur eine Differenz von 0,685% auf die Ausgangsmasse an Kornzertrümmerung.

**Patentansprüche**

1. Verfahren zur Nutzung von fein- und feinstkörniger Wirbelschichtasche, die besonders bei der Verbrennung von ballasthaltigen Steinkohlen mit den Verbrennungsgasen aus dem Fluidbett abgeführt und an den Wärmetauschern, bzw. den Filtern anfällt, mit einem Bindemittel gemischt oder angereichert sowie mit befeuchteten, kernebildenden gröberen Körnungen zusammengeführt und durchmengt wird, **dadurch gekennzeichnet,** daß die Wirbelschichtasche mit bis zu 25 Gew.-% eines Bindemittels, wie z.B. Zement, Kalk oder Gips intensiv gemischt und einem durchfeuchteten kernebildenden Material in der Körnung 1 - 10 mm zugegeben und so lange durchmengt wird, bis die gewünschte Volumenvergrößerung durch Anlagerung des Feinmaterials an die Kernbildner eingetreten ist und das so erhaltene Produkt zum Abbinden und Aushärten aus dem Mischer ausgetragen, ggfs. zusätzlich hydrothermal gehärtet und gelagert wird.

2. Verfahren nach Anspruch 1, **dadurch gekennzeichnet,** daß die noch warme Wirbelschichtasche mit dem Bindemittel durch Verwirbelung gemischt und beim anschließenden Abbindeprozeß die Wärme als Beschleuniger ausgenutzt wird.

3. Verfahren nach Anspruch 1, **dadurch gekennzeichnet,** daß der Wirbelschichtasche je nach späterem Einsatzbereich 3 - 15 %, vorzugsweise 10 Gew.-% Portland- oder Hochofen oder Eisenportlandzement zugemischt wird.

4. Verfahren nach Anspruch 1, **dadurch gekennzeichnet,** daß die Wirbelschichtasche dem feuchten Material kontinuierlich während des Durchmengens zugeführt wird.

5. Verfahren nach Anspruch 1, **dadurch gekennzeichnet,** daß als feuchtes, poriges Kernmaterial Hüttensand, Schlackensand, Flugasche oder die Kesselasche der Wirbelschichtanlage - in der Körnung 1 - 4 mm - oder auch geschäumtes oder gefasertes Material eingesetzt wird, das eine Körnung von 1 - 10 mm aufweist.

6. Verfahren nach Anspruch 1, **dadurch gekennzeichnet,** daß das Mischprodukt während des Durchmengens mit Wasser bedüst wird.

7. Verfahren nach Anspruch 1, **dadurch gekennzeichnet,** daß das Durchmengen überwacht und bei Erreichen der gewünschten oberen Korngröße abgebrochen und das Mischprodukt ausgetragen und gelagert wird.

8. Verfahren nach Anspruch 1, **dadurch gekennzeichnet,** daß das Mischprodukt nach dem Durchmengen über eine Rollbahn abgeführt und dabei mit einer Mischung aus trockener Wirbelschichtasche und Bindemittel bestäubt wird.

9. Verfahren nach Anspruch 1, **dadurch gekennzeichnet,** daß das Mischprodukt mit langsam abbindenden Zementen abgebunden wird.

10. Verfahren nach Anspruch 1, **dadurch gekennzeichnet,** daß größere Körnungen im Kornbereich 1,0 bis 10,0 mm als Kernbildner zugeführt werden, wobei die Kornbandspreizung und der Körnungsanteil über die Zugabe der kernbildner auf den Verwendungszweck des herzustellenden Zuschlags abgestellt wird.

11. Verfahren nach Anspruch 10, **dadurch gekennzeichnet,** daß als Bindemittel Kalk eingesetzt, mit der Wirbelschichtasche und mit den Kernbildnern gemischt und zum Aushärten unter Sattdampfbedingungen bei ca. 180°C bei 4 - 6 Stunden Dauer gehärtet wird.

12. Verfahren nach Anspruch 11, **dadurch gekennzeichnet,** daß bei der Zugabe von Kalk jeweils die in der Wirbelschichtasche enthaltene Kalkmenge auf 6 bis 7 Gew.-% ergänzt wird.

13. Verfahren nach Anspruch 10, **dadurch gekennzeichnet,** daß als Bindemittel Gips eingesetzt, mit der Wirbelschichtasche und mit den Kernbildnern gemischt und zum Aushärten an der Luft gelagert wird.

14. Verfahren nach Anspruch 13, **dadurch gekennzeichnet,** daß bei der Zugabe von Gips jeweils der Wirbelschichtasche in Abhängigkeit vom darin enthaltenen, hochentwässerten Anhydritanteil langsam abbindender Gips in der Form A II U-Mittelbrand bis zu 25 % Gesamtanteil, bezogen auf die Trockenmasse zugeführt wird.

15. Verfahren nach Anspruch 1 oder einem der nachfolgenden Ansprüche, **dadurch** abgeändert, daß die Wirbelschichtasche und das Bindemittel sowie die Kerne intensiv trocken gemischt, teilbefeuchtet (20 - 25 % Feuchte) und bei der Formgebung durch Bedüsung und Puderung mit einer Kombination aus Filterasche und Bindemittel die Kornhüllenstärke beeinflußt wird.

16. Verfahren nach Anspruch 1 oder Anspruch 10, **dadurch gekennzeichnet,** daß die befeuchteten Kernbildner auf einen waagerecht oder schwach geneigt laufenden Trommelboden gegeben und über ein Krähl- oder Mischwerk mit dem Wirbelschichtasche/Bindemittel-Gemisch vermengt werden, bis die vorgegebene Volumenvergrößerung erreicht wird.

17. Verfahren nach Anspruch 16, **dadurch gekennzeichnet,** daß die Kernbildner zusätzlich mit Wasser besprüht und mit dem Gemisch bepudert werden.

18. Verfahren nach Anspruch 1 oder Anspruch 10, **dadurch gekennzeichnet,** daß zur Erlangung höherer Korndichte Kerne aus zerkleinertem grünen Bergematerial oder Gesteinsbruch als Grobsand bzw. Feinsplitt, vorzugsweise bei 5 mm klassiert, für die Kernbildung eingesetzt werden.

19. Verfahren, nach einem oder mehreren der vorhergehenden Ansprüche, **dadurch gekennzeichnet,** daß bei Wirbelschichtaschen mit einem ausreichend hohen, freien CaO-Gehalt auf die Zugabe eines Bindemittels verzichtet wird.

20. Verfahren, nach einem oder mehreren der vorhergehenden Ansprüche, **dadurch gekennzeichnet,** daß den an den Filtern anfallenden Wirbelschichtaschen andere, aus entsprechenden Kornbändern bestehende mineralische und aus thermischen Prozessen stammende, vorzugsweise latent hydraulische Stäube beigegeben werden.

**Claims**

1. Method for using fine- and very fine-grained fluidised bed ash, which especially when burning mineral coal containing ballast, is removed with the combustion gases from the fluidised bed and accumulates on the heat exchangers or the filters, is mixed or enriched with a binder and is combined and mixed thoroughly with moistened, nucleating, coarser grains, characterised in that the fluidised bed ash is mixed intensively with up to 25% by weight of a binder, such as for example cement, lime or plaster and is added to a thoroughly moistened, nucleating material having a grain size of 1 - 10 mm and mixed thoroughly until the desired increase in volume has occurred due to the accumulation of fine material on the nucleating substance and the product obtained in this way is removed from the mixer for setting and hardening, if necessary is additionally hardened hydrothermally and stored.

2. Method according to Claim 1, characterised in that the still warm fluidised bed ash is mixed with the binder by turbulence and during the subsequent setting process, the heat is utilised as an accelerator.

3. Method according to Claim 1, characterised in that according to its later range of use, 3 - 15%, preferably 10% by weight Portland or blast-furnace or iron Portland cement is added to the fluidised bed ash.

4. Method according to Claim 1, characterised in that the fluidised bed ash is supplied continuously to the moist material during the thorough mixing.

5. Method according to Claim 1, characterised in that as the moist, porous nucleating material, foundry sand, clinker sand, light ashes or boiler ashes of the fluidised bed installation - having a grain size of 1 - 4 mm - or even foamed or grained material is used, which has a grain size of 1 - 10 mm.

6. Method according to Claim 1, characterised in that the mixed product is sprayed with water during mixing.

7. Method according to Claim 1, characterised in that the mixing is monitored and interrupted on reaching the desired upper grain size and the mixed product is discharged and stored.

8. Method according to Claim 1, characterised in that after mixing, the mixed product is discharged by way of a roller conveyor and in this case dusted with a mixture of dry fluidised bed ash and binder.

9. Method according to Claim 1, characterised in that the mixed product is set with slow-setting cements.

10. Method according to Claim 1, characterised in that larger grain sizes in the grain range of 1.0 to 10.0 mm are supplied as the nucleating substances, the grain band spread and the grain size distribution being coordinated with the use of the additive to be produced, by way of the addition of the nucleating substance.

11. Method according to Claim 10, characterised in that lime is used as the binder, is mixed with the fluidised bed ash and with the nucleating substances and for hardening under saturated steam conditions is hardened at approximately 180°C for 4 to 6 hours.

12. Method according to Claim 11, characterised in that when adding lime, the quantity of lime contained in the fluidised bed ash is respectively supplemented to 6 to 7% by weight.

13. Method according to Claim 10, characterised in that plaster is used as the binder, is mixed with the fluidised bed ash and with the nucleating substances and for hardening is stored in the air.

14. Method according to Claim 13, characterised in that during the addition of plaster, slow-setting plaster in the form A II U-middle calcination up to 25% total proportion, relative to the dry mass, is supplied to the fluidised bed ash depending on the highly dehydrated anhydride proportion contained therein.

15. Method according to Claim 1 or one of the following Claims, modified by the fact that the fluidised bed ash and the binder as well as the nucleating substances are mixed intensively in the dry state, partly moistened (20 - 25% moisture) and at the time of shaping the thickness of the grain casing is influenced by spraying and dusting with a combination of filter ash and binder.

16. Method according to Claim 1 or Claim 10, characterised in that the moistened nucleating substances are placed on a drum base travelling horizontally or with a slight inclination and by way of a rabble or mixing device are mixed with the mixture of fluidised bed ash and binder, until the predetermined increase in volume is achieved.

17. Method according to Claim 16, characterised in that the nucleating substances are additionally sprayed with water and dusted with the mixture.

18. Method according to Claim 1 or Claim 10, characterised in that in order to achieve a higher grain density, nuclei of crushed, green mining material or broken rock as coarse sand or stone chippings, preferably graded to 5 mm, are used for the nucleation.

19. Method according to one or more of the preceding Claims, characterised in that in the case of fluidised bed ashes with a sufficiently high, free CaO content, the addition of a binder is dispensed with.

20. Method according to one or more of the preceding Claims, characterised in that other mineral dusts consisting of corresponding grain bands and preferably latent hydraulic dusts originating from thermal processes are added to the fluidised bed ashes accumulating on the filters.

**Revendications**

1. Procédé pour l'utilisation de cendre de lit fluidisé à grains fins et les plus fins qui, en particulier lors de la combustion de houille contenant des matières inertes, est évacuée hors du lit fluidisé avec les gaz de combinaison et arrive aux échangeurs de chaleur ou respectivement aux filtres, est mélangée ou enrichie avec un liant ainsi qu'entraînée et mélangéé intimement avec des grains plus gros humidifiés formant des noyaux, caractérisé en ce que la cendre de lit fluidisé est mélangée intensivement à jusqu'à 25% en poids d'un liant tel que, par exemple, du ciment, de la chaux ou du plâtre et est ajoutée à un matériau humidifié formant des noyaux avec une granulométrie de 1-10mm et est mélangée intimement jusqu'à ce que l'accroissement de volume souhaité soit obtenu par incrustation du matériau fin sur les formateurs de noyaux, et le produit ainsi obtenu est extrait du mélangeur pour prendre et durcir, le cas échéant est durci additionnellement par voie hydrothermique, et est stocké.

2. Procédé selon la revendication 1, caractérisé en ce que la cendre de lit fluidisé encore chaude est mélangée au liant par tourbillonnement et on utilise la chaleur comme accélérateur dans le processus de prise suivant.

3. Procédé selon la revendication 1, caractérisé en ce qu'on mélange à la cendre de lit fluidisé, selon la plage d'utilisation ultérieure, 3-15%, de préférence 10% en poids de ciment Portland, de haut fourneau ou Portland de fer.

4. Procédé selon la revendication 1, caractérisé en ce que la cendre de lit fluidisé est amenée en continu au matériau humide pendant le mélange intime.

5. Procédé selon la revendication 1, caractérisé en ce qu'on utilise comme matériau de noyau poreux humide du sable sidérurgique, du sable de laitier granulé, des cendres volantes ou les cendres de chaudière du dispositif à lit fluidisé - avec une granulométrie de 1-4mm - ou bien également un matériau moussé ou mis en fibres, qui présente une granulométrie de 1-10mm.

6. Procédé selon la revendication 1, caractérisé en ce que le produit mixte est arrosé par de l'eau lors du mélange intime.

7. Procédé selon la revendication 1, caractérisé en ce que le mélange intime est surveillé et interrompu lorsque la dimension supérieure de grains souhaitée est atteinte et le produit mixte est extrait et stocké.

8. Procédé selon la revendication 1, caractérisé en ce que le produit mixte après le mélange intime est évacué sur un chemin de roulement et y est soupoudré par un mélange de cendre de lit fluidisé sèche et de liant.

9. Procédé selon la revendication 1, caractérisé en ce que le produit mixte est pris par un ciment à prise lente.

10. Procédé selon la revendication 1, caractérisé en ce que des granulométries supérieures dans la plage de grains de 1,0 à 10,0mm sont amenées en tant que formateurs de noyaux, l'étendue de la bande des grains et la proportion des granulométries par addition des formateurs de noyaux étant adaptées au but d'utilisation de l'agrégat à fabriquer.

11. Procédé selon la revendication 10, caractérisé en ce qu'on utilise de la chaux comme liant, on la mélange à la cendre de lit fluidisé et aux formateurs de grains et on durcit pour la prise à environ 180°C pendant une durée de 4-6 heures dans des conditions de vapeur saturée.

12. Procédé selon la revendication 11, caractérise en ce que, dans le cas d'addition de chaux, la quantité de chaux contenue à chaque fois dans la cendre de lit fluidisé est complétée à 6 à 7% en poids.

13. Procédé selon la revendication 10, caractérisé en ce qu'on utilise du plâtre comme liant, on le mélange à la cendre de lit fluidisé et aux formateurs de noyaux et on stocke à l'air pour la prise.

14. Procédé selon la revendication 13, caractérisé en ce que, lors de l'addition de plâtre, on envoie à la cendre de lit fluidisé chaque fois du plâtre à prise lente en fonction de la teneur en sulfate de chaux anhydre hautement déshydraté qu'il contient, sous la forme A II demi-cuisson U jusqu'à une teneur totale de 25% rapporté à la masse séche.

15. Procédé selon la revendication 1 ou l'une des revendications suivantes, modifié en ce que la cendre de lit fluidisé et le liant ainsi que les noyaux sont mélangés intensivement à sec, sont partiellement humidifiés (20-25% d'humidité) et la grandeur d'enveloppe des grains est soumise à l'influence, lors du formage, d'une combinaison de cendre de filtration et de liant par aspersion ou poudrage.

16. Procédé selon la revendication 1 ou la revendication 10, caractérisé en ce que les formateurs de noyaux humidifiés sont amenés sur un fond de tambour se déplaçant horizontalement ou légèrement incliné et sont mélangés au mélange cendre de lit fluidisé/liant au moyen d'un mécanisme de raclage ou de mélange jusqu'à ce l'augmentation de volume prédéterminée soit atteinte.

17. Procédé selon la revendication 16, caractérisé en ce que les formateurs de noyaux sont additionnellement arrosés d'eau et saupoudrés par le mélange.

18. Procédé selon la revendication 1 ou la revendication 10, caractérisé en ce que, pour atteindre une grosseur de grains plus élevée, on utilise, pour la formation des noyaux, des noyaux en matériau minier brut broyé ou déchets de carrière en tant que sable grossier ou respectivement gravillon, de préférence calibrés à 5 mm.

19. Procédé selon une ou plusieurs des revendications précédentes, caractérisé en ce qu'on renonce à l'addition d'un liant dans le cas de cendres de lit fluidisé ayant une teneur en Ca O libre suffisamment élevée.

20. Procédé selon une ou plusieurs des revendications précédentes, caractérisé en ce qu on ajoute aux cendres de lit fluidisé obtenues aux filtres d'autres poussières, de préférence hydrauliques latentes, minérales constituées de bandes de granulométrie correspondantes et provenant de processus thermiques.

FIG.1

FIG.2

# FIG. 3